# EUROPEAN PATENT APPLICATION

(11) **EP 3 892 588 A1**
(43) Date of publication of application: **13.10.2021**
(21) Application number: 19893315.2
(22) Date of filing: 06.12.2019
(51) Int. Cl.: C01G 45/12, B01D 15/36, B01J 20/06, C01D 15/08, C02F 1/42

(54) **PRODUCTION METHOD FOR LITHIUM-CONTAINING SOLUTION**

(30) Priority: 07.12.2018 JP 2018229507
(71) Applicant: SUMITOMO METAL MINING CO., LTD., Tokyo 105-8716 (JP)
(72) Inventor: TAKANO Masatoshi, Niihama-shi, Ehime 792-0002 (JP); ASANO Satoshi, Niihama-shi, Ehime 792-0002 (JP); IKEDA Osamu, Niihama-shi, Ehime 792-0002 (JP); MATSUMOTO Shin-ya, Niihama-shi, Ehime 792-0002 (JP); KUDO Yohei, Niihama-shi, Ehime 792-0002 (JP)
(74) Representative: Jones, Nicholas Andrew
(86) International application number: PCT/JP2019/047811
(87) International publication number: WO 2020/116607

(57) **Abstract**

Provided is a method for producing a lithium-containing solution that prevents the dissolution of the whole lithium manganese oxide while maintaining the efficiency of an elution step. The method for producing a lithium-containing solution comprises performing an adsorption step of contacting a lithium adsorbent obtained from lithium manganese oxide with a low lithium-containing liquid for adsorption to give post-adsorption lithium manganese oxide, an elution step of contacting the post-adsorption lithium manganese oxide with an acid solution to give a lithium-containing solution with residual manganese, and a manganese oxidation step of oxidating manganese to give a lithium-containing solution with a suppressed manganese concentration, performed in this order. The acid solution is a 0.5 mol/L or more and 4.0 mol/L or less hydrochloric acid solution. Accordingto the production method, in the elution step, the dissolution of the whole lithium manganese oxide can be suppressed while maintaining the efficiency of exchange reaction between cations including Li⁺ and H⁺. Thus, the repeated use of the lithium adsorbent becomes possible.

## Description

### Technical Field

The present invention relates to a method for producing a lithium-containing solution. Further specifically, the present invention relates to a method for producing a lithium-containing solution, by which a lithium-containing solution is produced from lithium manganese oxide.

### Background Art

Lithium is broadly used in industry as, such as addition agents for ceramic or glass, glass flux for steel continuous casting, grease, pharmaceutical products and batteries. In particular, lithium ion batteries in which such lithium is used are known as secondary batteries having high energy density and high voltage, and thus the applications thereof as batteries for electronic equipment such as notebook personal computers or on-vehicle batteries for electric vehicles and hybrid vehicles are currently expanding and causing a sudden surge in demand therefor. This causes a sudden increase in demand for lithium as a raw material.

Lithium has been produced in the form of lithium hydroxide or lithium carbonate by purifying salt lake brine or lithium-containing ores, such as spodumene (Li₂O·Al₂O₃·2SiO₄) as raw materials. However, in view of production cost, not a process of removing impurities other than lithium to cause lithium to remain in an aqueous solution, but a process of selectively collecting lithium from an aqueous solution in which impurities coexist with lithium is desired.

A known process for selectively collecting lithium alone is a method in which lithium manganese oxide that is an inorganic adsorbent is used. Lithium manganese oxide having a spinel structure has good capacity of selectively adsorbing lithium as a result of pre-treatment; that is, lithium-hydrogen exchange via contacting with acid, and thus can be repeatedly used through adsorption and elution in a manner similar to ion-exchange resins.

Specifically, in a process for selectively collecting lithium, lithium manganese oxide serves as a precursor of a lithium adsorbent. Examples of a method for producing the lithium manganese oxide include dry methods for producing the lithium manganese oxide by firing alone and wet methods for producing the same in aqueous solutions. Unlike the dry methods, the wet methods are capable of stably producing the lithium manganese oxide in large quantities.

Specifically, Patent Literature 1 discloses a method for producing lithium manganese oxide by a wet method. The wet method involves heat treatment for accelerating crystallization reaction after preparation of lithium manganese oxide by reaction in an aqueous solution. The wet method specifically involves mixing γ-manganese oxyhydroxide with lithium hydroxide for hydrothermal reaction at 100°C to 140°C under pressure, so as to obtain lithium manganese oxide (LiMn₂O₄), and then performing heat treatment at temperatures ranging from 400°C to 700°C, so as to oxidize trivalent manganese to tetravalent manganese, whereby lithium manganese oxide (Li₂Mn₂O₅) can be stably obtained without causing any structural change.

The lithium manganese oxide obtained by the above method or the like is used as disclosed in Non-patent literature 1, for example. First, with the use of H_{1.6}Mn_{1.6}O₄ obtained from Li_{1.6}Mn_{1.6}O₄ by acid treatment, exchange reaction between cations is performed to adsorb lithium in brine, thereby obtaining Li_{1.6}Mn_{1.6}O₄ again (adsorption step). Next, predetermined acid is added to obtain H_{1.6}Mn_{1.6}O₄ and to obtain a lithium-containing solution in which Li ions are dissolved (desorption step, or may also be referred to as "elution step" in the Description). Impurities are removed from the lithium-containing solution and the lithium-containing solution is concentrated by heating, thereby obtaining lithium carbonate and the like.

### Citation List

### Patent Literature

[Patent Literature 1] Japanese Patent No.3388406

### [Non-patent Literature]

[Non-patent Literature 1] Tang Weiping "Lithium Recovery System from brine", [online], June 11, 2010, Kagawa Industry Support Foundation, [November 22,2018], Internet (www.kagawa-isf.jp/rist/seika-happyou/21tang.pdf)

### Summary of Invention

### Technical Problem

However, increasing the amount of acid to be used in the above elution step in order to increase the efficiency of lithium elution is problematic in that this does not lead to exchange reaction between cations, but may result in dissolution of the whole lithium manganese oxide.

In view of the above circumstances, an obj ect of the present invention is to provide a method for producing a lithium-containing solution, which is capable of preventing the dissolution of the whole lithium manganese oxide while maintaining the efficiency of the elution step.

### Solution to Problem

The method for producing a lithium-containing solution of a 1^{st} invention comprises performing an adsorption step of contacting a lithium adsorbent obtained from lithium manganese oxide with a low lithium-containing liquid for adsorption to give post-adsorption lithium manganese oxide, an elution step of contacting the post-adsorption lithium manganese oxide with an acid solution to give a lithium-containing solution with residual manganese, and a manganese oxidation step of oxidating manganese by adding an oxidant and a pH adjuster to the lithium-containing solution with residual manganese to give a lithium-containing solution with a suppressed manganese concentration, performed in this order, wherein the acid solution is a 0.5 mol/L or more and 4.0 mol/L or less hydrochloric acid solution.

The method for producing a lithium-containing solution of a 2^{nd} invention comprises the elution step in the 1st invention performed at 0°C or higher and 70°C or lower.

### Advantageous Effects of Invention

According to the 1^{st} invention, in the elution step, the acid solution as a 0.5 mol/L or more and 4.0 mol/L or less hydrochloric acid solution can suppress the dissolution of the whole lithium manganese oxide while maintaining the efficiency of exchange reaction between cations including Li⁺ and H⁺ in the elution step. In other words, the repeated use of a lithium adsorbent becomes possible. Moreover, the manganese oxidation step allows obtaining a lithium-containing solution with a suppressed manganese concentration.

According to the 2^{nd} invention, the elution step at 0°C or higher and 70°C or lower suppresses the dissolution of the whole lithium manganese oxide and allows reliably maintaining the efficiency of exchange reaction between cations.

### Brief Description of Drawings

Fig. 1 is a flow chart of the method for producing a lithium-containing solution according to an embodiment of the present invention.
Fig. 2 is a graph depicting the concentration of manganese in a Li-containing solution with respect to the concentration of hydrochloric acid.

### Description of Embodiments

Next, the embodiments of the present invention are as described below on the basis of the drawings. However, the following embodiments illustrate the method for producing a lithium-containing solution for realization of the technical idea of the present invention, and thus the present invention does not intend to limit the method for producing a lithium-containing solution to the following method.

The method for producing a lithium-containing solution according to the present invention comprises an adsorption step of contacting a lithium adsorbent obtained from lithium manganese oxide with a low lithium-containing liquid for adsorption to give post-adsorption lithium manganese oxide, an elution step of contacting the post-adsorption lithium manganese oxide with an acid solution to give a lithium-containing solution with residual manganese, and a manganese oxidation step of oxidating manganese by adding an oxidant and a pH adjuster to this lithium-containing solution with residual manganese to give a lithium-containing solution with a suppressed manganese concentration, performed in this order, wherein the acid solution is a 0.5 mol/L or more and 4.0 mol/L or less hydrochloric acid solution.

In the elution step of the method for producing a lithium-containing solution, the acid solution as a 0.5 mol/L or more and 4.0 mol/L or less hydrochloric acid solution can suppress the dissolution of the whole lithium manganese oxide while maintaining the efficiency of exchange reaction between cations including Li⁺ and H⁺ in the elution step. In other words, the repeated use of a lithium adsorbent becomes possible. Moreover, the manganese oxidation step allows obtaining a lithium-containing solution with a suppressed manganese concentration.

Further, the method for producing a lithium-containing solution according to the present invention comprises the elution step which is performed at 0°C or higher and 70°C or lower.

The elution step is performed at 0°C or higher and 70°C or lower, so that the dissolution of the whole lithium manganese oxide can be suppressed as well as the efficiency of exchange reaction between cations can be reliably maintained.

### (Embodiments)

### (Preceding stage of the adsorption step)

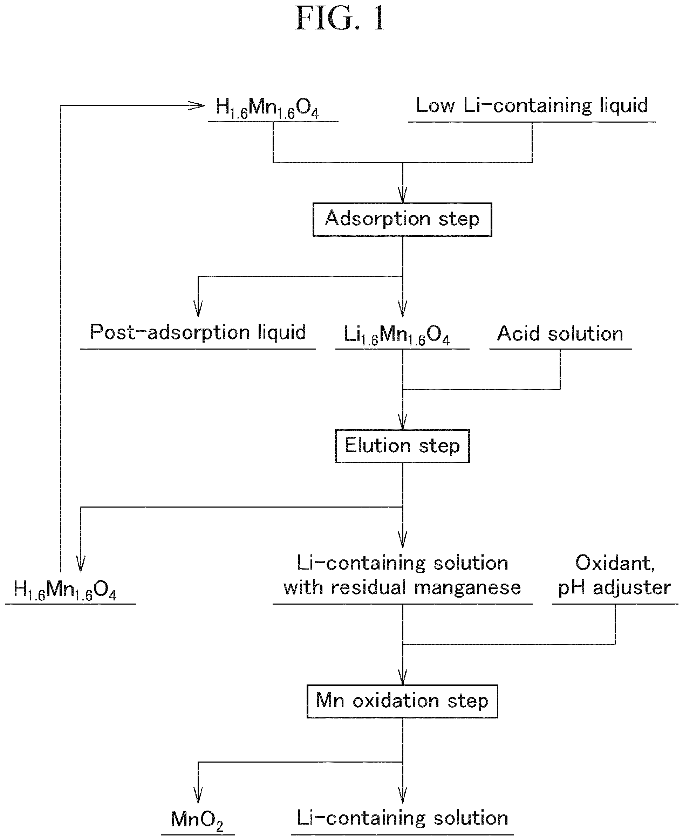

The adsorption step involves contacting a lithium adsorbent with a low lithium-containing liquid, obtaining post-adsorption lithium manganese oxide. A method for obtaining a lithium adsorbent to be used in the adsorption step is described as follows. Note that Fig. 1 depicts a flow chart of the method for producing a lithium-containing solution according to an embodiment of the present invention, and the "preceding stage of the adsorption step" is the stage where the H_{1.6}Mn_{1.6}O₄ in the uppermost stage in Fig. 1 is obtained.

Lithium manganese oxide is subjected to acid treatment to give a lithium adsorbent as depicted in Formula 1. Note that in Formula 1, lithium manganese oxide is represented by Li_{1.6}Mn_{1.6}O₄, but lithium manganese oxide is not limited thereto. For example, Li_{1.33}Mn_{1.67}O₄ can also be used. Specifically, when lithium manganese oxide is Li_{1.6}Mn_{1.6}O₄, the resulting lithium adsorbent is H_{1.6}Mn_{1.6}O₄. However, when lithium manganese oxide (lithium manganese tetroxide) is Li_{1.33}Mn_{1.67}O₄, for example, the resulting lithium adsorbent is H_{1.33}Mn_{1.67}O₄. Moreover, acid to be used for the acid treatment is specified as HCl, but the example of the acid is not limited thereto. For example, sulfuric acid, nitric acid, and the like can also be used herein.

The shape of lithium manganese oxide is determined in view of lithium adsorption in the adsorption step. For example, lithium manganese oxide can be in various forms such as a powdery form, a granular form resulting from granulation of the powder, and a columnar form resulting from spraying to column fibers. Acid treatment is performed to give H_{1.6}Mn_{1.6}O₄ as a lithium adsorbent, for example. The form of the lithium adsorbent is the same as that of the lithium manganese oxide before the acid treatment.

[Formula 1] Li_{1.6}Mn_{1.6}O₄+1.6HCl→H_{1.6}Mn_{1.6}O₄+1.6LiCl

### (Adsorption step)

Fig. 1 depicts a flow chart of the method for producing a lithium-containing solution according to an embodiment of the present invention. The adsorption step involves contacting a lithium adsorbent with a low lithium-containing liquid for ion exchange reaction between H and Li depicted in Formula 2, thereby obtaining post-adsorption lithium manganese oxide. In the Description, the lithium manganese oxide obtained by the adsorption step may be referred to as post-adsorption lithium manganese oxide.

[Formula 2] H_{1.6}Mn_{1.6}O₄+1.6LiCl→Li_{1.6}Mn_{1.6}O₄+1.6HCl

The low lithium-containing liquid corresponds to seawater or salt lake brine, for example. For example, seawater contains an average of0.17 ppm lithium. However, in these low lithium-containing liquids, in addition to lithium, elements such as sodium, magnesium, and calcium are dissolved. According to the method for producing a lithium-containing solution of the present invention, lithium can be selectively collected from a low lithium-containing liquid in which these elements are dissolved. In addition, the low lithium-containing liquid means that the lithium content per unit volume thereof is lower than that of a Li-containing solution described later.

In the adsorption step, a method for contacting a low lithium-containing liquid with an adsorbent differs depending on the form of the adsorbent. For example, when the adsorbent is powdery, a predetermined amount of the adsorbent is introduced into a low lithium-containing liquid followed by stirring of the mixture for a predetermined time period, for the low lithium-containing liquid to contact with the adsorbent, so that lithium is adsorbed to the adsorbent. When the adsorbent is granular, the granular adsorbent is sealed in a container for liquid passage, a low lithium-containing liquid is passed through the container for the low lithium-containing liquid to contact with the adsorbent, so that lithium is adsorbed to the adsorbent. When the adsorbent is sprayed over the column fibers, the passage of the low lithium-containing solution through the column causes the low lithium-containing liquid to contact with the adsorbent, so that lithium is adsorbed to the adsorbent. Note that when the low lithium-containing liquid is passed through the column, the liquid should be repeatedly passed through the column so as to ensure the required number of contact with the adsorbent.

Through the adsorption step, the adsorbent will be post-adsorption lithium manganese oxide. Further the low lithium-containing liquid will be a post-adsorption liquid after lithium adsorption to the adsorbent. The post-adsorption liquid is discharged into sea or lake from which the low lithium-containing liquid has been collected. At this time, the post-adsorption liquid is discharged after treated by neutralization or the like so that it is suitable for discharge.

### (Elution step)

In the elution step, the post-adsorption lithium manganese oxide brought in contact with an acid solution for reaction depicted in Formula 3 obtains a lithium-containing solution with residual manganese. At this time, the post-adsorption lithium manganese oxide is regenerated as a lithium adsorbent through exchange reaction between cations including Li⁺ and H⁺, and then the lithium adsorbent is used again in the adsorption step.

[Formula 3] Li_{1.6}Mn_{1.6}O₄+1.6HCl→H_{1.6}Mn_{1.6}O₄+1.6LiCl

The acid solution to be contacted with the post-adsorption lithium manganese oxide in the elution step of the embodiment is a 0.5 mol/L or more and 4.0 mol/L or less hydrochloric acid solution, and is preferably a 0.5 mol/L or more and 2.0 mol/L or less hydrochloric acid solution.

In the elution step, the acid solution is a 0.5 mol/L or more and 4.0 mol/L or less hydrochloric acid solution, so that in the elution step, the dissolution of the whole lithium manganese oxide can be suppressed while maintaining the efficiency of exchange reaction between cations including Li⁺ and H⁺, Specifically, the repeated use of the lithium adsorbent becomes possible.

When the concentration of the acid solution is lower than 0.5 mol/L, exchange reaction between cations cannot be sufficiently performed, lowering the efficiency of the exchange reaction. Further, when the concentration of the acid solution is higher than 4.0 mol/L, the whole lithium manganese oxide is dissolved in the acid solution, so that the post-adsorption lithium manganese oxide cannot be used again as a lithium adsorbent. Note that the acid of the acid solution is not limited to hydrochloric acid. For example, sulfuric acid, acetic acid or the like may also be used herein.

In the embodiment, the elution step is preferably performed at 0°C or higher and 70°C or lower. The elution step is performed at 0°C or higher and 70°C or lower, so that the dissolution of the whole lithium manganese oxide can be suppressed, as well as the efficiency of exchange reaction between cations can be reliably maintained.

If the elution step is performed at a temperature lower than 0°C, the acid solution may be frozen, and thus no exchange reaction between cations may be performed. Further, if the elution step is performed at a temperature higher than 70°C, the whole lithium manganese oxide may be dissolved.

The way of contacting the post-adsorption lithium manganese oxide with an acid solution in the elution step differs depending on the form of lithium manganese oxide. For example, when lithium manganese oxide is in a powdery form, post-adsorption lithium manganese oxide powder is introduced into an acid solution and then the mixture is stirred, thereby contacting the post-adsorption lithium manganese oxide with the acid solution. When lithium manganese oxide is in a granular form or in a form sprayed over column fibers, an acid solution is passed through the container for liquid passage while lithium manganese oxide granules and the column are being housed within the container for liquid passage, thereby contacting the post-adsorption lithium manganese oxide with the acid solution.

### (Manganese oxidation step)

In the manganese oxidation step, an oxidant and a pH adjuster are added to the lithium-containing solution with residual manganese obtained in the elution step for oxidizing divalent manganese to tetravalent manganese, thereby obtaining a lithium-containing solution with a suppressed manganese concentration. Since tetravalent manganese has low solubility, it precipitates in the solution. This can suppress the concentration of manganese contained in the lithium-containing solution with residual manganese. Further, the precipitated manganese can be used again as a raw material of the lithium adsorbent.

To oxidize divalent manganese to tetravalent manganese, an oxidant and a pH adjuster are added to the lithium-containing solution with residual manganese. When the oxidant and the pH adjuster are added, it is preferred that a pH is adjusted to be in a range of3 or more and 7 or less and a redox potential vs the silver-silver chloride electrodes is adjusted to be 600 mV or more and 1100 mV or less. In other words, the pH and the redox potential are measured simultaneously, while the oxidant and the pH adjuster are added simultaneously or altematingly so as to make it within the range described above. As an oxidant, for example, sodium hypochlorite, sodium chlorite, ozone, permanganate or the like can be used, but are not limited thereto; using any materials whose redox potential is adjustable will present no problems. As a pH adjuster, for example, antalkalis such as sodium hydroxide and calcium hydrate can be used, but are not limited thereto; using any materials whose pH is adjustable will present no problems.

### (Subsequent stage of manganese oxidation step)

In the lithium-containing solution obtained in the manganese oxidation step, lithium is present in the form of lithium chloride (LiCl) in this embodiment. Hence, alkali is added to the solution or the solution is concentrated by heating, thus obtaining lithium in the form of lithium carbonate, for example.

Further, the post-adsorption lithium manganese oxide is treated with an acid solution to give a lithium adsorbent, and thus the lithium adsorbent is used again in the adsorption step.

### Examples

Hereinafter, specific examples of the method for producing a lithium-containing solution of the present invention will be further described in detail, but the present invention is not limited by these examples.

### <Example 1>

### (Adsorption step)

To a solution prepared by dissolving lithium in simulation of salt lake brine; that is a low lithium-containing liquid, 5 g of a lithium adsorbent, H_{1.6}Mn_{1.6}O₄, was added, thereby obtaining 5.3 g of post-adsorption lithium manganese oxide, Li_{1.6}Mn_{1.6}O₄. The post-adsorption lithium manganese oxide was subjected to solid-liquid separation, and then dried to give lithium manganese oxide powder.

### (Elution step)

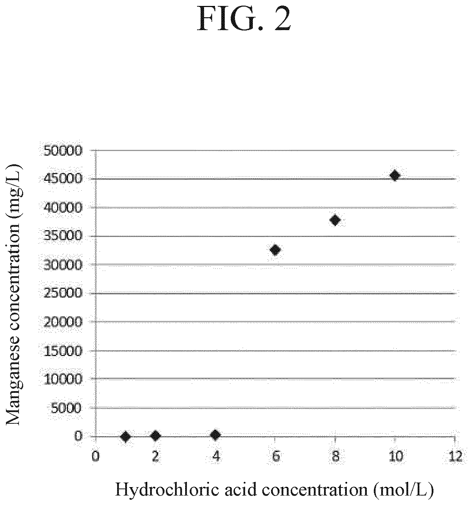

The above post-adsorption lithium manganese oxide powder Li_{1.6}Mn_{1.6}O₄ (3 g) and 42 mL of a 1 mol/L aqueous hydrochloric acid solution as an acid solution were mixed by stirring for 30 minutes within a 100 mL PYLEX (registered trademark) beaker. At this time, the aqueous hydrochloric acid solution was kept at a temperature of 25°C. After mixing by stirring, the resultant was left to stand for 12 hours, the solution (lithium-containing solution with residual manganese) was subjected to solid-liquid separation, and then the manganese concentration in the solution was measured by ICP-AES. The results are depicted in Table 1 and Fig. 2. Note that the results indicated in the examples and the like are for the lithium-containing solution with residual manganese in the prior stage of the manganese oxidation step to find the amount of manganese dissolution. Lithium-containing solutions are generally obtained from lithium-containing solution with residual manganese through the manganese oxidation step.

High manganese concentration in the solution indicates that the whole lithium manganese oxide was dissolved in the acid solution. If the manganese concentration was not higher than 500 mg/L, it was determined that the amount of the whole lithium manganese oxide dissolved was suppressed and the post-adsorption lithium manganese oxide can be used again as a lithium adsorbent. In Example 1, the manganese concentration was 6.1 mg/L, suggesting the suppressed dissolution of the whole lithium manganese oxide. Note that, in Example 1, by adding chlorine gas as an oxidant and calcium hydrate as a pH adjuster to the lithium-containing solution with residual manganese after the elution step, the manganese oxidation step was performed, thereby obtaining the lithium-containing solution. When the manganese concentration in the lithium-containing solution was measured by ICP-AES, the manganese concentration was less than 1 mg/L, which was less than the lower limit of detection of the measurement instrument.

### <Example 2>

Example 2 was performed under the same conditions as in Example 1 except for the use of a 2 mol/L aqueous hydrochloric acid solution as an acid solution in the elution step. The results are depicted in Table 1 and Fig. 2.

In Example 2, the manganese concentration was 35 mg/L, suggesting the suppressed dissolution of the whole lithium manganese oxide. In addition, after performing the manganese oxidation step, the manganese concentration was less than 1 mg/L, which was less than the lower limit of detection of the measurement instrument.

### <Example 3>

Example 3 was performed under the same conditions as in Example 1 except for the use of a 4 mol/L aqueous hydrochloric acid solution as an acid solution in the elution step. The results are depicted in Table 1 and Fig. 2.

In Example 3, the manganese concentration was 289 mg/L, suggesting the suppressed dissolution of the whole lithium manganese oxide. In addition, after performing the manganese oxidation step, the manganese concentration was less than 1 mg/L, which was less than the lower limit of detection of the measurement instrument.

### <Comparative example 1>

Comparative example 1 was performed under the same conditions as in Example 1 except for the use of a 6 mol/L aqueous hydrochloric acid solution as an acid solution in the elution step. The results are depicted in Table 1 and Fig. 2.

In Comparative example 1, the manganese concentration was 32500 mg/L, revealing that the dissolution of the whole lithium manganese oxide was not suppressed.

### <Comparative example 2>

Comparative example 2 was performed under the same conditions as in Example 1 except for the use of an 8 mol/L aqueous hydrochloric acid solution as an acid solution in the elution step. The results are depicted in Table 1 and Fig. 2.

In Comparative example 2, the manganese concentration was 37800 mg/L, revealing that the dissolution of the whole lithium manganese oxide was not suppressed.

### <Comparative example 3>

Comparative example 3 was performed under the same conditions as in Example 1 except for the use of a 10 mol/L aqueous hydrochloric acid solution as an acid solution in the elution step. The results are depicted in Table 1 and Fig. 2.

In Comparative example 3, the manganese concentration was 45500 mg/L, revealing that the dissolution of the whole lithium manganese oxide was not suppressed.

**[Table 1]**

| | Hydrochloric acid concentration mol/L | Manganese concentration mg/L |
|---|---|---|
| Example 1 | 1 | 6.1 |
| Example 2 | 2 | 35 |
| Example 3 | 4 | 289 |
| Comparative example 1 | 6 | 32500 |
| Comparative example 2 | 8 | 37800 |
| Comparative example 3 | 10 | 45500 |

## Claims

1. A method for producing a lithium-containing solution, comprising:
an adsorption step of contacting a lithium adsorbent obtained from lithium manganese oxide with a low lithium-containing liquid for adsorption to give post-adsorption lithium manganese oxide;
an elution step of contacting the post-adsorption lithium manganese oxide with an acid solution to give a lithium-containing solution with residual manganese; and
a manganese oxidation step of oxidating manganese by adding an oxidant and a pH adjuster to the lithium-containing solution with residual manganese to give a lithium-containing solution with a suppressed manganese concentration, performed in this order, wherein
the acid solution is a 0.5 mol/L or more and 4.0 mol/L or less hydrochloric acid solution.

2. The method for producing a lithium-containing solution according to claim 1, wherein the elution step is performed at 0°C or higher and 70°C or lower.
